Europäisches Patentamt

European Patent Office

Office européen des brevets

(11) Veröffentlichungsnummer: **0 084 348**
A2

# (12) EUROPÄISCHE PATENTANMELDUNG

(21) Anmeldenummer: 83100235.7

(22) Anmeldetag: 13.01.83

(51) Int. Cl.³: **B 01 D 5/00**
B 01 D 47/06, B 01 D 53/18
F 28 B 3/02

(30) Priorität: 20.01.82 DE 3201583

(43) Veröffentlichungstag der Anmeldung:
27.07.83 Patentblatt 83/30

(84) Benannte Vertragsstaaten:
FR GB IT

(71) Anmelder: Taprogge Gesellschaft mbH
Wacholderstrasse 7
D-4000 Düsseldorf 31(DE)

(72) Erfinder: Sonnenschein, Hans, Dr.-Ing.
Rüttelskamp 48
D-4300 Essen 1-Bredeney(DE)

(72) Erfinder: Eimer, Klaus, Dipl.-Ing.
Hölender Weg 11
D-4030 Ratingen 6(DE)

(72) Erfinder: Schildmann, Hans-Werner, Ing. grad.
Bleibergstrasse 6
D-5629 Heiligenhaus(DE)

(72) Erfinder: Bochinski, Rolf
Uhlenbroicher Weg 3
D-4100 Duisburg 29(DE)

(74) Vertreter: Andrejewski, Walter et al,
Patentanwälte Andrejewski, Honke & Partner Postfach
10 02 54 Theaterplatz 3
D-4300 Essen 1(DE)

(54) Vorrichtung für den direkten Wärme- und/oder Stoffaustausch zwischen einer Flüssigphase und einer Gasphase (insbes. zwischen Wasser und Dampf bei Wärmekraftwerken).

(57) Die Erfindung bezieht sich auf eine Vorrichtung für den direkten Wärme- und/oder Stoffaustausch zwischen einer Flüssigphase und einer Gasphase. Zum grundsätzlichen Aufbau gehören eine Zuführungseinrichtung für die Flüssigphase, ein Sammler für die Flüssigphase, eine Einrichtung für die Zuführung der Gasphase und eine Mehrzahl von parallel zueinander angeordneten strömungskanalbildenden Ablaufwänden, die im Horizontalschnitt eben sind. Die Ablaufwände sind zumindest bereichsweise gegen die Vertikale geneigt. Die Zuführungseinrichtung für die Flüssigphase besteht aus einem gegenüber der Breite der Kanalwände schmalen Zuführungskanal. Dieser ist im Bereich der Mitte der Strömungskanäle angeordnet und verläuft orthogonal zu den Ablaufwänden. Die Ablaufwände sind am Ende der Strömungskanäle zu gegenüber den Ablaufwänden schmaleren Austrittsrinnen verformt. Die Austrittsrinnen sowie die daraus austretenden, den Sammlern zugeführten Strahlen für die Flüssigphase lassen zwischen sich Durchtritte frei. Die Gasphase ist durch die Durchtritte hindurch bei Gegenstrombetrieb in die Strömungskanäle einführbar bzw. bei Gleichstrombetrieb aus diesen abziehbar.

./...

EP 0 084 348 A2

Fig.1

Vorrichtung für den direkten Wärme- und/oder Stoffaustausch zwischen einer Flüssigphase und einer Gasphase (insbes. zwischen Wasser und Dampf bei Wärmekraftwerken)

Die Erfindung bezieht sich gattungsgemäß auf eine Vorrichtung für den direkten Wärme- und/oder Stoffaustausch zwischen einer Flüssigphase und einer Gasphase, - mit

Zuführungseinrichtung für die Flüssigphase,

Sammler für die ablaufende Flüssigphase,

Einrichtung für die Führung der Gasphase und

einer Mehrzahl von im wesentlichen parallel zueinander angeordneten, strömungskanalbildenden Ablaufwänden,

wobei die Ablaufwände zumindest bereichsweise gegen die Vertikale geneigt sind und die Zuführungseinrichtung für die Flüssigphase im Bereich des oberen Randes der Ablaufwände angeordnet ist. Die Erfindung bezieht sich insbes. auf eine solche Vorrichtung für den Wärme- und/oder Stoffaustausch zwischen Wasser und Dampf bei Wärmekraftwerken. Eine gattungsgemäße Vorrichtung kann aber auch als Wäscher der Gasphase bei chemischen und physikalischen Prozessen eingesetzt werden. Es versteht sich, daß die kanalbildenden Ablaufwände an den Seiten durch Trennwände oder das Gehäuse der Vorrichtung begrenzt sind, so daß insoweit geschlossene Strömungskanäle entstehen. Solche können aber auch mehrfach nebeneinander angeordnet sein. Dabei können diese Trennwände auch an die Ablaufwände angeformt sein.

- 2 -

Bei der bekannten gattungsgemäßen Vorrichtung (DE-PS 24 17 163) handelt es sich um einen Kondensator, der im Gleichstrom zwischen Dampf und Wasser bei Wärmekraftwerken arbeitet. Die Ablaufwände schließen über die gesamte Länge der Strömungskanäle dicht aneinander an, bilden also gleichsam einen geschlossenen, durchlaufenden Boden, wobei die schon erwähnten Querwände nebeneinanderliegende Strömungskanäle abteilen.

Am Ende der einzelnen Strömungskanäle befindet sich eine bewegliche Schwimmklappe, die den Weg für die Gasphase sperrt. Die Gasphase wird im Bereich dieser Schwimmklappen gleichsam quer zur Strömungsrichtung der Flüssigphase abgezogen, soweit sie nicht kondensierte. Das alles hat sich für Kondensatoren für eine Dampf- an Wasser-Kondensation bei Wärmekraftwerken bewährt, jedoch kann die bekannte Vorrichtung nicht allgemein für einen Wärme- und/oder Stoffaustausch eingesetzt werden, der je nach den speziellen Verhältnissen im Gleichstrom oder im Gegenstrom erfolgt.

Der Erfindung liegt die Aufgabe zugrunde, die gattungsgemäße Vorrichtung so weiter auszubilden, daß der Wärme- und/oder Stoffaustausch je nach dem Bestimmungszweck der Vorrichtung, im Gleichstrom oder im Gegenstrom durchgeführt werden kann.

Zur Lösung dieser Aufgabe lehrt die Erfindung, daß die Zuführungseinrichtung für die Flüssigphase aus einem gegenüber der Breite der Kanalwände schmalen Zuführungskanal besteht,

der im Bereich der Mitte der Strömungskanäle orthogonal zu den Ablaufwänden verläuft, daß die Ablaufwände am Ende der Strömungskanäle zu gegenüber den Ablaufwänden schmaleren Austrittsrinnen geformt
sind,

wobei die Austrittsrinnen sowie die daraus austretenden,
dem Sammler zugeführten Strahlen der Flüssigphase zwischen sich Durchtritte freilassen,

und daß die Gasphase durch die Durchtritte hindurch bei
Gegenstrombetrieb in die Strömungskanäle einführbar bzw. bei
Gleichstrombetrieb aus diesen abziehbar ist.

Bei der erfindungsgemäßen Vorrichtung können die Ablaufwände
einseitig oder beidseitig mit der Flüssigphase beaufschlagt
sein. Eine bevorzugte Ausführungsform der Erfindung ist dadurch gekennzeichnet, daß der Zuführungskanal für jede Gruppe
von Ablaufwänden einen in Zuführungsrichtung abnehmenden
Kanalquerschnitt sowie Düsenanordnungen aufweist, die zwischen benachbarte Ablaufwände einfassen und beide benetzen.
Im allgemeinen wird man die Zuführungskanäle mit einem umgekehrt U-förmigen Querschnitt versehen und auf den oberen
Rand der Ablaufwände aufsetzen.

Eine bevorzugte Ausführungsform, die sich in strömungsmäßiger
Hinsicht durch definierte Verhältnisse auszeichnet und es
insbes. erlaubt, in allen Strömungskanälen praktisch die
gleichen thermodynamischen Verhältnisse zu verwirklichen, ist
dadurch gekennzeichnet, daß die Ablaufwände in Zuführungsrichtung der Flüssigphase von Ablaufwand zu Ablaufwand ansteigend angeordnete obere Ränder aufweisen und entsprechend die Austrittsrinnen mit schräg ansteigend angeordneten Austrittsrinnenmündungen versehen sind. Die Düsenanordnungen sind zweckmäßigerweise Doppeldüsen mit zu den Ablaufwänden weisenden Umlenkkanten. Im Rahmen der Erfindung liegt es, eine Anzahl von Düsen, z. B. jede zweite, flüssigkeitsseitig während des Betriebes abzusperren, so daß die entsprechend zugeordneten Ablaufwände nur einseitig benetzt werden. Das erlaubt besondere Anwendungen der erfindungsgemäßen Vorrichtung, z. B. im Zusammenhang mit Hybridkühltürmen.

Die Gestaltung der Ablaufwände im Rahmen der schon beschriebenen Parameter ist grundsätzlich beliebig. Es empfiehlt sich jedoch, die Ablaufwände im ganzen leicht bogenfömig zu führen, so daß die Strömungskanäle gleichsam einen Boden aufweisen, der zum Strömungskanalinneren hin konkav gekrümmt ist. Jedenfalls empfiehlt es sich, die Ablaufwände im Bereich der Austrittsrinnen auf die Horizontale zu umzulenken, damit die von den Austrittsrinnen ablaufenden Strahlen der Flüssigphase ohne zu zerflattern in den nachgeordneten Sammler eintreten. Zur Stabilisierung dieser austretenden Strahlen der Flüssigphase trägt bei der Ausführungsform mit beidseits benetzten Ablaufwänden auch bei, daß die Ablaufwände vor und/oder zu Beginn der Austrittsrinnen quer zur Ablaufrichtung erstreckte Überführungsspalte aufweisen, durch die ablaufende Flüssigphase der Oberseite der Austrittsrinnen zuführbar ist. Im übrigen kann es zweckmäßig sein, im Übergangsbereich zwischen den Ablaufwänden und den Austrittsrinnen Stabilisatoren für die Flüssigphase vorzusehen. Insbes. kann dort mit Strömungsteilern gearbeitet werden. Dabei handelt es sich z. B. um keilartige Einbauten, die gleichzeitig auch eine versteifende Verbindung der Ablaufwände darstellen können. Im Rahmen der Erfindung liegt es fernerhin, an die Austrittsrinnen Führungsrohre für die austretenden Strahlen der Flüssigphase anzuschließen, die dem Sammler zugeführt werden.

Die erreichten Vorteile sind vor allem darin zu sehen, daß eine erfindungsgemäße Vorrichtung, je nach Verwendungszweck sowohl im Gleichstrom als auch im Gegenstrom betrieben werden kann. Weder bei Gleichstrombetrieb noch bei Gegenstrombetrieb bildet die ablaufende Flüssigphase einen Schleier, der von der Gasphase in unkontrollierter Weise beaufschlagt und dadurch in störender Weise zerteilt wird. Die ablaufende Flüssigphase bildet vielmehr ein Strömungsgitter mit einem verhältnismäßig geringen Strömungswiderstand.

Im folgenden wird die Erfindung anhand einer lediglich ein Ausführungsbeispiel darstellenden Zeichnung ausführlicher erläutert. Es zeigen in schematischer Darstellung

Fig. 1 einen Vertikalschnitt durch eine erfindungsgemäße Vorrichtung für den Wärme- und/oder Stoffaustausch,

Fig. 2 einen Schnitt in Richtung A-A durch den Gegenstand nach Fig. 1,

Fig. 3 in gegenüber der Fig. 1 wesentlich vergrößertem Maßstab einen Ausschnitt B aus dem Gegenstand nach Fig. 1,

Fig. 4 einen Schnitt in Richtung C-C durch den Gegenstand nach Fig. 3,

Fig. 5 in gegenüber der Fig. 1 wesentlich vergrößertem Maßstab die Seitenansicht einer Austrittsrinne aus dem Gegenstand nach Fig. 1,

Fig. 6 die Ansicht des Gegenstandes der Fig. 5 aus Richtung des Pfeiles D und

Fig. 7 in gegenüber der Fig. 5 nochmals vergrößertem Maßstab den Ausschnitt E aus dem Gegenstand nach Fig. 5.

Die in den Figuren dargestellte Vorrichtung dient für den direkten Wärme- und/oder Stoffaustausch zwischen einer Flüssigphase und einer Gasphase. Insbes. mag es sich um den Wärme- und/oder Stoffaustausch zwischen Wasser und Dampf bei einem Wärmekraftwerk handeln.

Zum grundsätzlichen Aufbau der Vorrichtung gehören

eine Zuführungseinrichtung 1 für die Flüssigphase,

ein Sammler 2 für die ablaufende Flüssigphase,

Einrichtungen 3 für die Führung der Gasphase und

eine Mehrzahl von im wesentlichen parallel zueinander angeordneten, strömungskanalbildenden, im Horizontalschnitt ebenen Ablaufwänden 4.

Die Ablaufwände 4 sind zumindest bereichsweise gegen die Vertikale geneigt. Im Ausführungsbeispiel sind sie im ganzen bogenförmig geführt, und zwar mit von oben nach unten zunehmender, nach oben konkaver Krümmung. Die Zuführungseinrichtung 1 für die Flüssigphase ist im Bereich des oberen Randes 5 der Ablaufwände 4 angeordnet. Das alles ist in einem Gehäuse 6 untergebracht.

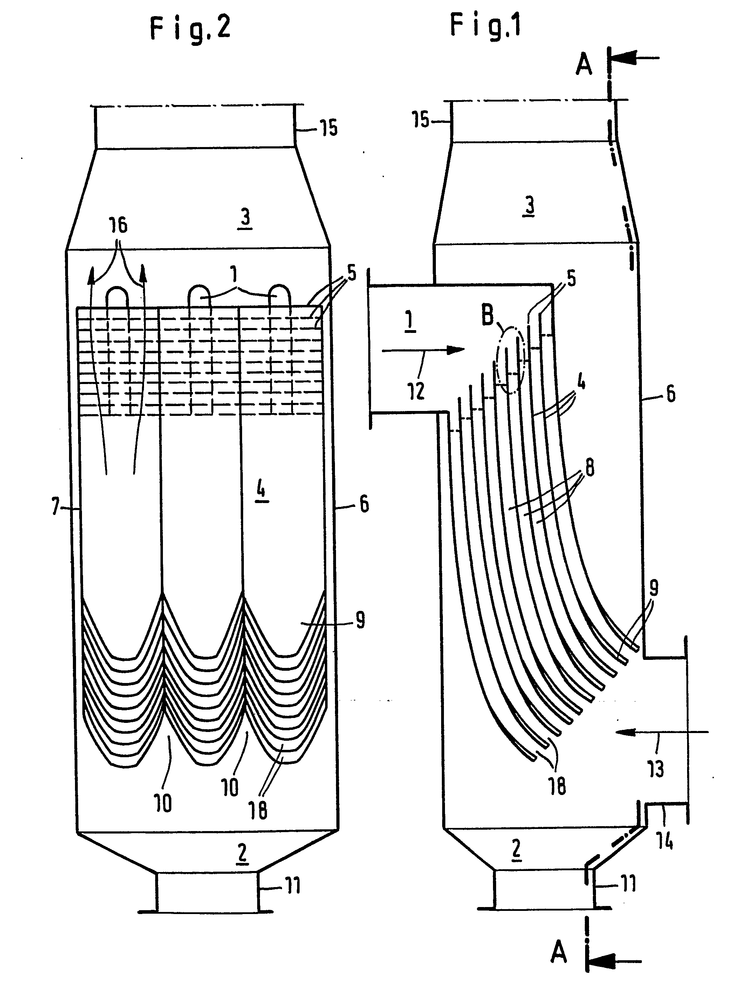

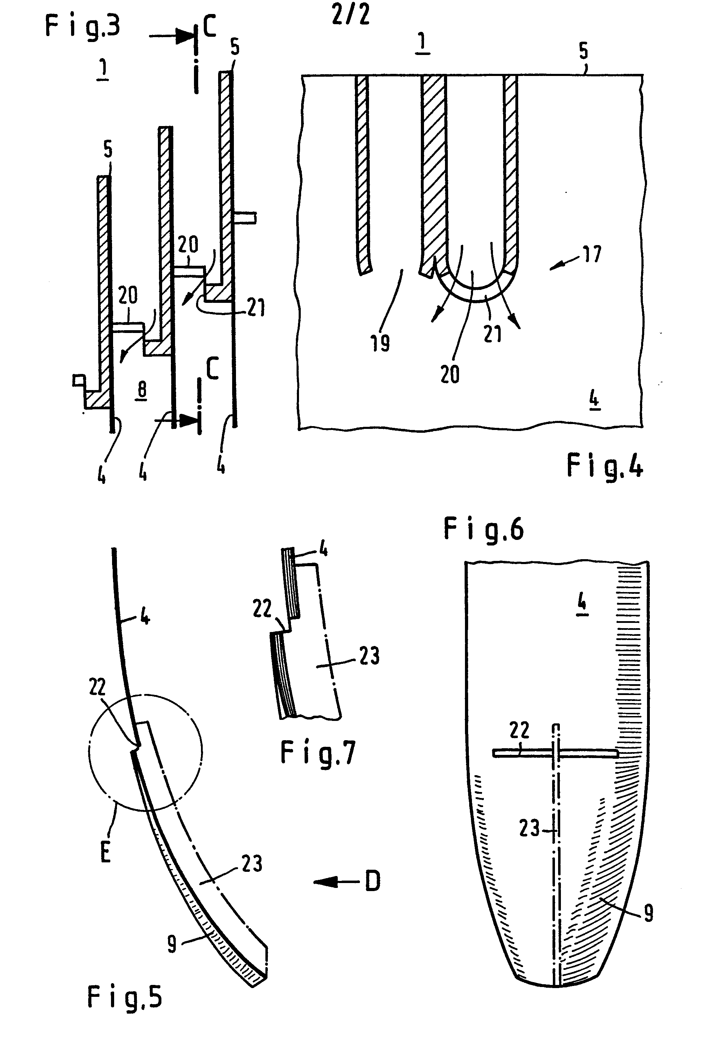

Aus einer vergleichenden Betrachtung der Fig. 1 und 2 entnimmt man, daß die Zuführungseinrichtung 1 für die Flüssigphase aus einem gegenüber der Breite der Kanalwände 7 schmalen Zuführungskanal besteht. Dieser ist im Bereich der Mitte der Strömungskanäle 8 angeordnet und verläuft orthogonal zu den Ablaufwänden 4. Die im Horizontalschnitt ebenen Ablaufwände 4 sind am Ende der Strömungskanäle 8 zu gegenüber den Ablaufwänden 4 schmaleren Austrittsrinnen 9 verformt. Das erkennt man insbes. aus einer vergleichenden Betrachtung der Fig. 5 und 6. Die Austrittsrinnen 9 sowie die daraus austretenden, dem Sammler 2 zugeführten Strahlen der Flüssigphase lassen zwischen sich Durchtritte 10 frei. Die Anordnung ist so getroffen, daß die Gasphase durch die Durchtritte 10 hindurch einführbar bzw. abführbar ist. Der Sammler 2 für die Flüssigphase besteht im Ausführungsbeispiel aus einem trichterförmigen Bodenteil des Gehäuses 6 der Vorrichtung mit Ablauf 11.

In Fig. 1 deuten Pfeile 12, 13 einerseits den Weg der Flüssigphase und andererseits den Weg der Gasphase an. Die Gasphase wird über einen Eintrittsstutzen 14 zugeführt und tritt am Kopf des Gehäuses 6 über einen Abzugsstutzen 15 aus. Dabei durchströmt sie hinter dem Eintrittsstutzen 14 das Gitter, welches aus den Austrittsrinnen 9 und den daraus

- 8 -

austretenden Strahlen der Flüssigphase gebildet ist. Dabei umströmt sie oben die Zuführungskanäle 1, wie durch Pfeile 16 in Fig. 2 angedeutet wurde. Die Strömungsrichtung der Gasphase könnte ohne weiteres umgekehrt werden. Das bedeutet, daß die Vorrichtung sowohl im Gleichstrombetrieb als auch im Gegenstrombetrieb arbeiten kann.

Der Zuführungskanal 1 weist im Ausführungsbeispiel und nach bevorzugter Ausführungsform der Erfindung einen in Zuführungsrichtung abnehmenden Kanalquerschnitt sowie Düsenanordnungen 17 auf, die zwischen benachbarte Ablaufwände 4 einfassen und beide Ablaufwände 4 benetzen. Der Kanalquerschnitt nimmt im Ausführungsbeispiel ab, weil die hohe Höhe des Zuführungskanals 1 in Zuführungsrichtung geringer wird. Der Zuführungskanal 1 besitzt einen umgekehrt U-förmigen Querschnitt und ist reiterartig auf dem oberen Rand 5 der Ablaufwände 4 aufgesetzt. Dabei besitzen die Ablaufwände 4 in Zuführungsrichtung der Flüssigphase von Ablaufwand 4 ansteigend angeordnete obere Ränder 5 und entsprechend sind die Austrittsrinnen 9 mit schräg ansteigend angeordneten Austrittsrinnenmündungen 18 versehen.

In den Fig. 3 und 4 erkennt man Einzelheiten einer Düsenanordnung 17. Es handelt sich um Doppeldüsen 19, 20 mit zu den Ablaufwänden 4 weisenden Umlenkkanten 21.

Im Ausführungsbeispiel sind die Ablaufwände 4 im Bereich der Austrittsrinnen 9 auf die Horizontale zu umgelenkt. Dazu wird insbes. auch auf die Fig. 5 und 6 verwiesen. In Fig. 7 erkennt man, daß die Ablaufwände 4 vor und/oder zu Beginn der Austrittsrinnen 9 quer zur Ablaufrichtung erstreckte Über-

- 9 -

führungsspalte 22 aufweisen, durch die ablaufende Flüssigphase der Oberseite der Austrittsrinne 9 zuführbar ist. Außerdem sind im Übergangsbereich zwischen den Ablaufwänden 4 und den Austrittsrinnen 9 Stabilisatoren 23 für die Flüssigphase angeordnet. Sie sind als Strömungsteiler, gleichsam als nach oben weisende Kiele ausgeführt und in den Fig. 5 und 6 angedeutet worden. - Nicht dargestellt wurde, daß an die Austrittsrinnen 9 Führungsrohre für die austretenden Strahlen der Flüssigphase angeschlossen werden können, die dem Sammler 2 zugeführt sind.

_____

Patentansprüche:

1. Vorrichtung für den direkten Wärme- und/oder Stoffaustausch zwischen einer Flüssigphase und einer Gasphase, insbes.
zwischen Wasser und Dampf bei Wärmekraftwerken, - mit

Zuführungseinrichtung für die Flüssigphase,

Sammler für die Flüssigphase,

Einrichtung für die Führung der Gasphase und

einer Mehrzahl von im wesentlichen parallel zueinander
angeordneten, strömungskanalbildenden Ablaufwänden,

wobei die Ablaufwände zumindest bereichsweise gegen die
Vertikale geneigt sind und die Zuführungseinrichtung für die
Flüssigphase im Bereich des oberen Randes der Ablaufwände
angeordnet ist, d a d u r c h   g e k e n n z e i c h n e t,
daß die Zuführungseinrichtung für die Flüssigphase aus einem
gegenüber der Breite der Kanalwände (7) schmalen Zuführungskanal (1) besteht,

der im Bereich der Mitte der Strömungskanäle (8)
orthogonal zu den Ablaufwänden (4) verläuft,

daß die Ablaufwände (4) am Ende der Strömungskanäle (8) zu
gegenüber den Ablaufwänden (4) schmaleren Austrittsrinnen (9)
geformt sind,

wobei die Austrittsrinnen (9) sowie die daraus austretenden, dem Sammler (2) zugeführten Strahlen der Flüssigphase zwischen sich Durchtritte (10) freilassen,

und daß die Gasphase durch diese Durchtritte (10) hindurch bei Gegenstrombetrieb in die Strömungskanäle (8) einführbar bzw. bei Gleichstrombetrieb aus diesen abziehbar ist.

2. Vorrichtung nach Anspruch 1, dadurch gekennzeichnet, daß der Zuführungskanal (1) einen in Zuführungsrichtung abnehmenden Kanalquerschnitt sowie Düsenanordnungen (17) aufweist, die zwischen benachbarte Ablaufwände (4) einfassen und beide benetzen.

3. Vorrichtung nach einem der Ansprüche 1 oder 2, dadurch gekennzeichnet, daß der Zuführungskanal (1) einen umgekehrt U-förmigen Querschnitt aufweist und reiterartig auf den oberen Rand (5) der Ablaufwände (4) aufgesetzt ist.

4. Vorrichtung nach einem der Ansprüche 1 bis 3, dadurch gekennzeichnet, daß die Ablaufwände (4) in Zuführungsrichtung der Flüssigphase von Ablaufwand (4) zu Ablaufwand (4) ansteigend angeordnete obere Ränder (5) aufweisen und entsprechend die Austrittsrinnen (9) mit schräg ansteigend angeordneten Austrittsrinnenmündungen (18) versehen sind.

5. Vorrichtung nach einem der Ansprüche 2 bis 4, dadurch gekennzeichnet, daß die Düsenanordnungen (17) als Doppeldüsen (19, 20) mit zu den Ablaufwänden (4) weisenden Umlenkkanten (21) ausgeführt sind.

- 12 -

6. Vorrichtung nach einem der Ansprüche 1 bis 5, dadurch gekennzeichnet, daß die Ablaufwände (4) im Bereich der Austrittsrinnen (9) auf die Horizontale zu umgelenkt sind.

7. Vorrichtung nach Anspruch 6 in der Ausführungsform nach Anspruch 2, mit beidseits benetzten Ablaufwänden, dadurch gekennzeichnet, daß die Ablaufwände (4) vor und/oder zu Beginn der Austrittsrinnen (9) quer zur Ablaufrichtung erstreckte Überführungsspalte (22) aufweisen, durch die ablaufende Flüssigphase der Oberseite der Austrittsrinne (9) zuleitbar ist.

8. Vorrichtung nach einem der Ansprüche 6 und 7, dadurch gekennzeichnet, daß im Übergangsbereich zwischen den Ablaufwänden (4) und den Austrittsrinnen (9) Stabilisatoren (23) für die ablaufende Flüssigphase angeordnet sind.

9. Vorrichtung nach Anspruch 8, dadurch gekennzeichnet, daß die Stabilisatoren (23) als Strömungsteiler ausgebildet sind.

10. Vorrichtung nach einem der Ansprüche 1 bis 9, dadurch gekennzeichnet, daß an die Austrittsrinnen (9) Führungsrohre für die austretenden Strahlen der Flüssigphase angeschlossen sind, die dem Sammler (2) zugeführt sind.

0084348

## Fig.2

## Fig.1

0084348

Fig.3

Fig.4

Fig.5

Fig.6

Fig.7